**Europäisches Patentamt**

**European Patent Office**

**Office européen des brevets**

(19)

(11) Veröffentlichungsnummer: **0 073 262 B1**

(12) **EUROPÄISCHE PATENTSCHRIFT**

(45) Veröffentlichungstag der Patentschrift:
13.11.85

(51) Int. Cl.⁴: **G 21 F 9/00**

(21) Anmeldenummer: **81106783.4**

(22) Anmeldetag: **31.08.81**

(54) Verfahren zum Abtrennen von Cäsiumionen aus wässrigen Lösungen unter Verwendung einer Adduktverbindung, bestehend aus einem macrocyclischen Polyether und einer anorganischen Heteropolysäure.

(43) Veröffentlichungstag der Anmeldung:
**09.03.83 Patentblatt 83/10**

(45) Bekanntmachung des Hinweises auf die Patenterteilung:
**13.11.85 Patentblatt 85/46**

(84) Benannte Vertragsstaaten:
**BE DE FR GB IT**

(56) Entgegenhaltungen:
**CS - A - 165 751**

**ANALYTICAL CHEMISTRY, Band 52, Nr. 7, Juni 1980, Seiten 1115-1119, Washington D.C., USA, L.A. FERNANDO et al.: "Ion-exchange properties of crown ether-phosphomolybdic acid precipitates"**
**Angew. Chem. 84 (1972), No. 1, S. 16-26**

(73) Patentinhaber: **Kernforschungszentrum Karlsruhe GmbH, Weberstrasse 5, D-7500 Karlsruhe 1 (DE)**

(72) Erfinder: **Blasius, Ewald, Prof. Dr. Ing., Leberstrasse 6, D-6600 Saarbrücken (DE)**
Erfinder: **Nilles, Karl-Heinz, Dipl.-Chem., Schüren 32, D-6670 St. Ingbert (DE)**

**0 073 262**

**Beschreibung**

Die Erfindung betrifft ein Verfahren zum Abtrennen von Cäsiumionen aus wäßrigen Lösungen unter Verwendung einer Adduktverbindung, bestehend aus einem Kronenether und einer anorganischen, in stark saurem und oxidierendem Medium beständigen Heteropolysäure.

Die Aufarbeitung und Verfestigung von mittelradioaktiven, wäßrigen Abfällen (MAW), wie sie beispielsweise als Abfall-Lösungen, -Konzentrate oder -Schlämme bei der Wiederaufarbeitung bestrahlter Kernbrenn- und/oder -Brutstoffe anfallen, wird durch die Gegenwart geringer Mengen der Cäsiumisotope $^{134}$Cs und $^{137}$Cs erschwert. Cäsium verdampft merklich beim Verglasen von MAW und wird auch aus den für die Endlagerung bestimmten Verfestigungsprodukten (Glas-, Zement- und Bitumenblöcke) leicht ausgelaugt. Eine selektive Abtrennung des Cs würde die Weiterverarbeitung mittelaktiver Abfälle erheblich erleichtern. Darüber hinaus erhielte man bei gleichzeitiger Abtrennung von $^{90}$Sr aus dem MAW niedrigradioaktive, wäßrige Abfälle (LAW = low active waste), da nach relativ kurzer Abklingzeit praktisch die gesamte Aktivität von den verhältnismäßig langlebigen Radionukliden $^{137}$Cs ($t_{1/2}=30$a) und $^{90}$Sr ($t_{1/2}=26$a) herrührt.

Die Abtrennung von Cs und Sr erfolgte nach den bekannten Verfahren hauptsächlich durch Mitfällungsreaktionen. Die Mitfällung lieferte für Sr und Cs jedoch keine befriedigenden DF-Werte (DF = Dekontaminations-Faktor). Deshalb wurden andere Verfahren gesucht, die eine selektive Abtrennung der beiden Radionuklide — gemeinsam oder einzeln — ermöglichen.

Die bisher für Cs$^+$-Ionen entwickelten Extraktionsverfahren sind für die Abtrennung von Cs$^+$ aus einem typischen MAW, wie ihn nachstehende Tabelle zeigt, mit seinem hohen Gehalt an NaNO$_3$ und freier Salpetersäure nicht geeignet.

| Inhaltsstoffe (stark saurer MAW) | Konzentration g/dm$^3$ |
|---|---|
| Salpetersäure | 64 (1 mol/dm$^3$) |
| Natriumnitrat | 42,5 (0,5 mol/dm$^3$) |
| Uran | 1,0 |
| Blei | 0,8 |
| Calcium | 0,2 |
| Magnesium | 0,2 |
| Eisen | 0,15 |
| Ruthenium | 0,07 |
| Kalium | 0,05 |
| Zink | 0,05 |
| Kupfer | 0,04 |
| Mangan | 0,02 |
| Chrom | 0,02 |
| Nickel | 0,01 |
| Zirkonium | 0,005 |
| Cäsium | 0,004 |
| Cer | 0,004 |
| Strontium | 0,002 |
| Antimon | 0,002 |
| Niob | 0,001 |

2

Diese Verfahren verwenden meist organische Reagenzien, welche entweder der organischen oder der zu extrahierenden wäßrigen Phase zugesetzt werden. Diese Reagenzien würden jedoch bei Kontakt mit dem in der Tabelle in seiner wesentlichen Zusammensetzung beschriebenen MAW entweder hydrolytisch oder oxidativ zerstört oder durch Protonierung unwirksam gemacht. Auch die in diesem Milieu sehr beständigen und $Cs^+$-selektiven Heteropolysäuren, die in Nitrobenzol als Lösungsmittel eingesetzt werden, (z. B. 12-Molybdatophosphorsäure, HPMo) sind in dieser Form für die kontinuierliche $Cs^+$-Extraktion aus dem als Beispiel beschriebenen MAW nicht verwendbar, da sie wegen ihrer guten Wasserlöslichkeit stark ausbluten. Sie müßten ständig ersetzt werden.

Das im Falle der HPMo dabei in größeren Mengen in den MAW gelangende Molybdän würde zudem die Weiterverarbeitung des MAW (Verglasung) stören. Schließlich besteht, abhängig von der $Cs^+$-Konzentration des MAW und der Heteropolysäurekonzentration in der Nitrobenzolphase, die Gefahr der Niederschlagsbildung, was zu erheblichen Störungen in einer kontinuierlich arbeitenden Anlage führen könnte.

Im Gegensatz zu den bisherigen Extraktionsmitteln für $Cs^+$ besitzen Dibenzo-Kronenether eine sehr geringe Wasserlöslichkeit und eignen sich somit, wenigstens zum Teil, für den Einsatz im kontinuierlichen Extraktionsbetrieb.

Da Kronenether Neutralliganden darstellen, wird bei der Extraktion auch das Anion mitextrahiert. Dieses hat jedoch einen entscheidenden Einfluß auf den Extraktionskoeffizienten. So lassen sich einfache Cäsiumsalze (Chlorid, Nitrat) mit Kronenethern in polaren Lösungsmitteln nur sehr schlecht extrahieren (mit Ausnahme von Nitromethan- und Nitrobenzol-Lösungen). Man ging deshalb dazu über, Kronenether mit bekannten $Cs^+$-spezifischen Reagenzien zu kombinieren (diese enthalten voluminöse, polarisierbare Anionen). Dies geschah bisher in der Form, daß man diese Reagenzien der zu extrahierenden wäßrigen Phase zusetzte (meistens Pikrinsäure) und mit Kronenethern (meist DB-18-C-6 bzw. Dicyclohexyl-18-C-6) in polaren Lösungsmitteln (meist Nitrobenzol) extrahierte (Angewandte Chemie, 84 (1972), Nr. 1, S. 16—26).

J. Rais und P. Selucký schlugen zur Abtrennung von $Cs^+$ aus nuklidhaltigen Lösungen zwei Extraktionssysteme vor, welche DB-18-C-6 in Verbindung mit Dipicrylamin bzw. Natriumtetraphenylborat verwenden (CS-PS 149 403, CS-PS 149 404).

Diese Verfahren sind jedoch beschränkt auf alkalische $Cs^+$-Lösungen (pH 11 bis 13): Dipicrylamin wird im sauren Bereich protoniert, Natriumtetraphenylborat hydrolysiert. Die beiden Verfahren funktionieren nur gut in Abwesenheit größerer $Na^+$- und $K^+$-Mengen.

Die gleichen Autoren haben ferner ein Addukt aus DB-18-C-6 und 12-Wolframatophosphorsäure hergestellt (CS-PS 165.751), welches eine säulenchromatographische Abtrennung von $Cs^+$ aus Wastelösungen erlaubt. Jedoch wirken sich auch hier größere $Na^+$- und $K^+$-Mengen störend aus.

Bei Untersuchungen des Ionenaustauschverhaltens an Kronenether-Phosphormolybdänsäure-Fällungen, unter anderen an Benzo-15-Krone-5-Molybdatophosphorsäure-Sorptionsmittel, wurde festgestellt, daß die in derselben Weise hergestellten und die gleiche Stöchiometrie aufweisenden Sorbentien bemerkenswert unterschiedliche Verteilungskoeffizienten $K_d$ besaßen, so daß eine Reproduzierbarkeit der Ergebnisse nicht erhalten werden konnte (Analytical Chemistry, Vol. 52, No. 7 (June, 1980), S. 1115 bis 1119). Insbesondere war das B-15-C-5-HPMo-Sorptionsmittel (in fester Form) nicht in der Lage, Alkalikationen, darunter Cäsiumionen, aus wäßrigen Lösungen zu einem merklichen Betrag zu entfernen.

Gemäß CS-PS 165 751, bzw. J. Radioanal. Chem. 35 (1977) 351, hergestellte Addukte von DB-18-C-6 mit 12-Molybdato- bzw. 12-Wolframatophosphorsäure lieferten im Satzversuch mit dem als Beispiel beschriebenen MAW $K_d$-Werte von 5 bzw. 9 $\left[\dfrac{cm^3}{g \cdot}\right]$

Der Erfindung liegt die Aufgabe zugrunde, ein verbessertes Verfahren zur Abtrennung von Cäsiumionen aus wäßrigen Lösungen der genannten Art bereitzustellen, das sowohl im diskontinuierlichen als auch im kontinuierlichen Betrieb störungsfrei, selbst bei Anwesenheit größerer Natrium- und Kaliumionenmengen und ohne Beschränkung auf bestimmte pH-Bereiche der Ausgangslösungen, mit gutem Erfolg ausgeführt werden kann. Ein Ausbluten der Heteropolysäure aus der Adduktverbindung soll ebenso vermieden werden können, wie die unerwünschte Bildung von Niederschlägen.

Diese Aufgabe wird gemäß der Erfindung in überraschend einfacher Weise gelöst durch die Verfahrensschritte

a) Herstellung einer Lösung der Adduktverbindung, die aus einem Kronenether aus der Gruppe 2,3,11,12-Dibenzo-1,4,7,10,13,16-hexa-oxa-cyclo-octadeca,2,11-dien (Dibenzo-18-krone-6, abgekürzt DB-18-C-6) oder 2,5,8,15,18,21,hexa-oxa-tricyclo[20.4.0.0^{9,14}]-hexa-cosan (Dicyclohexyl-18-krone-6, abgekürzt DC-18-C-6) oder höheren Homologen hiervon mit bis zu 30 Ringatomen, davon 10 O-Atomen oder Benzo-15-krone-5 (B-15-C-5), und aus einer Heteropolysäure aus der Gruppe
12-Molybdatophosphorsäure (HPMo),
12-Wolframatophosphorsäure (HPW),
12-Molybdatokieselsäure (HSiMo) oder
12-Wolframatokieselsäure (HSiW)

bzw. deren Salzen besteht, in einem polaren organischen Lösungsmittel,

b) Inkontaktbringen der Cäsiumionen enthaltenden wäßrigen Lösung mit der Lösung der Adduktverbindung aus a) zur Extraktion des Cäsiums aus der wäßrigen in die organische Phase und

c) Abtrennen der mit Cäsiumionen beladenen, organischen Phase von der cäsiumfreien oder nur noch geringe Mengen Cäsium enthaltenden wäßrigen Lösung.

Eine besonders günstige Ausbildung der Erfindung ist dadurch gekennzeichnet, daß die Lösung der Adduktverbindung als organisches Lösungsmittel Nitrobenzol, oder ein Gemisch aus Nitrobenzol und mindestens einer Species aus der Gruppe 1,1,2,2-Tetrachlorethan, Chloroform, 1,2-Dichlorethan oder 1,2-Dichlorbenzol enthält.

Eine vorteilhafte Weiterbildung des erfindungsgemäßen Verfahrens ist dadurch gekennzeichnet, daß die Lösung der Adduktverbindung nicht als solche verwendet wird, sondern vor deren Kontakt mit der Cäsiumionen enthaltenden wäßrigen Lösung als flüssige Ionenaustauscher-Phase auf Kieselgel als Trägermaterial aufgebracht wird.

Die Herstellung der Adduktlösungen kann durch Auflösen der Einzelkomponenten in Nitrobenzol im Molverhältnis

| | |
|---|---|
| Kronenether zu HPMo | wie $\geq 3 : 1$ |
| Kronenether zu PBW | wie $\geq 3 : 1$ |
| Kronenether zu HSiMo | wie $\geq 4 : 1$ |
| Kronenether zu HSiW | wie $\geq 4 : 1$ |

erfolgen oder durch Wiederauflösen einer durch

a) Mischen einer Dibenzo-Kronenether-Lösung mit einer Heteropolysäure-Lösung und Abtrennen der jeweiligen Lösungsmittel in amorphem oder kristallinem Zustand erhaltenen Adduktverbindung in der $H^+$-Form oder

b) Fällung mit Hilfe einer M(I)-Nitrat-Lösung, wobei M(I) = Na, K, Tl oder $NH_4$ bedeutet, aus einer klaren Lösungs-Mischung eines Dibenzo-Kronenethers mit einer Heteropolysäure in amorphem oder kristallinem Zustand erhaltenen, von den Lösungsmitteln abgetrennten Adduktverbindung in der entsprechend vorliegenden M(I)-Beladungsform.

Die Herstellung der Adduktlösungen auf dem Umweg über die zuvor in festem Zustand gewonnenen Adduktverbindungen und Auflösen der festen, gut dosierbaren Addukte nach Bedarf bringt den Vorteil mit sich, daß die Addukte, in stabiler Form gelagert, direkt in der gewünschten M(I)-Beladungsform zur Verwendung kommen.

Überraschenderweise hat es sich gezeigt, daß aus der Homologen-Reihe DB-18-C-6 bis DB-30-C-10 für die $Cs^+$-Extraktion aus sauren MAW-Lösungen der oben erwähnten Zusammensetzung, wenn die Kronenether allein, d. h. ohne Addukt-Partner verwendet werden, nur DB-21-C-7 geeignet ist, wie nachstehende Tabelle verdeutlicht:

| Kronenether allein, ohne Addukt-Partner | D | proz. Extraktion (%) |
|---|---|---|
| DC-18-C-6 | 0,02 | 1,5 |
| DB-18-C-6 | 0,02 | 1,9 |
| DB-21-C-7 | 1,03 | 50,7 |
| DB-24-C-8 | 0,09 | 8,2 |
| DB-27-C-9 | | |
| DB-30-C-10 | 0,19 | 16,1 |

Lösungsmittel: Nitrobenzol
Kronenetherkonzentration: 0,012 mol/l

Bereits bei alleiniger Verwendung von DB-21-C-7 erhält man also schon Extraktionskoeffizienten $> 1$. Kombiniert man DB-21-C-7 mit einer anorganischen, im sauren und oxidierenden Medium beständigen Verbindung, wie zum Beispiel mit einer der genannten Heteropolysäuren, und läßt man beide Extrak-

4

tionsmittel von Anfang an in der organischen Phase gelöst wirken, so werden höhere Extraktionskoeffizienten erreicht. Dibenzo-24-krone-8 weist wegen seines für $Cs^+$ optimalen Ringdurchmessers in bezug auf die Cäsiumselektivität eine noch bessere Eignung auf, liefert aber lediglich einen Extraktionskoeffizienten, der vergleichbar mit dem von DB-18-C-6 ist.

Nachstehende Tabelle gibt die bereits nach einer einfachen Batchoperation mit o. g. MAW erreichten D-Werte für Nitromethan und Nitrobenzol als Lösungsmittel bei verschiedenen Kronenetherkonzentrationen wieder ($v_{org.} = v_{wäßr.} = 10$ cm³, $t = 1$ h).

| Lösungsmittel | 0,012 M DB-21-C-7[1]) (ohne Addukt-Partner) | 0,018 M DB-21-C-7[2]) (ohne Addukt-Partner) |
|---|---|---|
| Nitrobenzol | 1,03 | 1,27 |
| Nitromethan | 2,03 | 2,87 |

[1]) 400facher Überschuß, bezogen auf $c_{Cs^+}$ in MAW (4 ppm)
[2]) 600facher Überschuß, bezogen auf $c_{Cs^+}$ in MAW (4 ppm).

Die Gleichgewichtseinstellung verlief sehr schnell, wobei die Extraktion des $Cs^+$ (als $CsNO_3$) durch die hohe Nitratkonzentration des MAW begünstigt wurde (Aussalzeffekt). Nitromethan kann jedoch trotz höherem Extraktionskoeffizienten nicht als Lösungsmittel empfohlen werden, da seine Löslichkeit in Wasser relativ hoch ist (11%; vgl. dazu 0,2% für Nitrobenzol).

Gemäß der vorliegenden Erfindung führt eine Kombination von DB-21-C-7 mit $Cs^+$-spezifischen Extraktionsmitteln zu einer teilweise beträchtlichen synergistischen Erhöhung des Extraktionskoeffizienten. Dabei erhöht oder ermöglicht der Kronenether nicht nur die Löslichkeit bekannter $Cs^+$-spezifischer (Fällungs-) Reagenzien in bestimmten organischen Lösungsmitteln, sondern verhindert auch fast völlig deren Ausbluten bzw. stabilisiert sie derart, daß sie außerhalb ihres normalen Existenzbereiches (stark saures Medium) eingesetzt werden können (bis pH = 13).

Die Herstellung der Adduktlösung erfolgt durch Auflösen der Einzelkomponenten (DB-21-C-7 und entsprechende Heteropolysäure) in Nitrobenzol im Molverhältnis≧3 : 1 bei HPMo und HPW, im Verhältnis≧4 : 1 bei HSiMo und HSiW.

Die sich dabei bildenden synergistisch wirkenden Addukte stellen flüssige Austauscher in der $H^+$-Form dar, wobei die HPMo- und HPW-Addukte drei und die HSiMo- und HSiW-Addukte vier austauschfähige Protonen besitzen.

Andere Beladungsformen der flüssigen Austauscher (z. B. $Na^+$-, $K^+$-, $NH_4^+$-, $Tl^+$-Form) können leicht durch Schütteln der $H^+$-Form mit der entsprechenden M(I)-Nitrat-Lösung erhalten werden (z. B. die $NH_4^+$-Form durch 1-stünd. Schütteln mit 3 mol/l $NH_4NO_3$-Lösung oder die $K^+$-Form durch Schütteln mit 2 mol/l $KNO_3$-Lösung).

Neben der direkten Herstellung der Adduktlösung durch Auflösen der Einzelkomponenten, besteht generell die Möglichkeit, die Addukte zunächst in fester Form zu isolieren und bei Bedarf im entsprechenden Lösungsmittel gelöst, einzusetzen. Dies gilt sowohl für die $H^+$-Form der Addukte als auch für die M(I)-Beladungsform.

Beim Versuch jedoch, das Heteropolysäureaddukt DB-21-C-7/HPMo gemäß Rais/Selucký, J. Radioanal. Chem. 35 (1977) 351; CS-PS 165.751 (1976) zu isolieren (das Rais et al-Verfahren zur Addukt-Herstellung besteht darin, daß eine Lösung von Kronenether, speziell DB-18-C-6, in Dichlormethan mit einer Lösung von HPMo bzw. HPW in 2 mol/l $HNO_3$ geschüttelt wird), erhält man nur eine klebrig-zähe dunkelbraune Masse (im Vergleich dazu liefert die Umsetzung mit DB-18-C-6 ein mikrokristallines Produkt). Nach der weiteren Aufarbeitung des zähen Produktes beträgt die Ausbeute lediglich 50%.

Einer im Rahmen der vorliegenden Erfindung ausgearbeiteten, beispielhaften Vorschrift zufolge, läßt sich das Addukt DB-21-C-7/HPMo jedoch quantitativ isolieren, wenn man die Herstellung in homogener Phase durchführt.

Durch einfaches Wiederauflösen der nach den im folgenden beschriebenen drei Methoden hergestellten, amorphen oder kristallinen Addukt-Verbindungen in Nitrobenzol erhält man dann ebenfalls die zur Durchführung des erfindungsgemäßen Verfahrens erforderlichen Heteropolysäureadduktlösungen.

Herstellung der Addukte in fester Form: In dieser und in den folgenden Vorschriften wurden als Chemikalien verwendet:

$H_3[PMo_{12}O_{40}] \cdot$ x $H_2O$ mit x ≈ 29 und
$H_3[PW_{12}O_{40}] \cdot$ x $H_2O$ mit x ≈ 24 der Firma Merck;
DB-21-C-7, hergestellt gemäß einer verbesserten Arbeitsvorschrift auf der Grundlage von C. J. Pedersens Arbeiten (J. Am. Chem. Soc. 89 (1967) 7017).

5

1a)  3 : 1-Addukt (DB-21-C-7/HPMo [3 : 1])

Man löst 0,5 g DB-21-C-7 (0,00 124 mol) in 40 cm³ Aceton, desweiteren 0,97 g HPMo · 29 H₂O in 20 cm³ Aceton (Verhältnis 3 : 1 genau einhalten). Man vereinigt beide Lösungen und zieht das Lösungsmittel im Vakuum ab, wobei bis 50°C erwärmt werden kann. Man erhält auf diese Weise ein braungrünes lockeres Produkt (1,25 g), welches die gleichen Extraktionseigenschaften besitzt wie das durch direktes Auflösen der Einzelkomponenten hergestellte Addukt.

1b)  4 : 1-Addukt (DB-21-C-7/HPMo [4 : 1]).

Gleiche Vorschrift wie 1a), statt 0,5 g werden 0,67 g DB-21-C-7 (0,00165 mol) eingesetzt. Man erhält dabei ein gelb-braunes Produkt von noch geringerer Schüttdichte.

Die gemäß den Vorschriften 1a) und 1b) gewonnenen 3 : 1- bzw. 4 : 1-Addukte können im Mörser leicht zu Produkten größerer Schüttdichte pulverisiert werden.

Sind die Addukte für den Einsatz im Flüssig-flüssig-Extraktionsbetrieb (besonders im kontinuierlichen) vorgesehen, so muß das Verhältnis DB-21-C-7 : Heteropolysäure mindestens 3 : 1 betragen. Bei Verwendung von Addukten mit Molverhältnissen < 3 : 1, die ebenfalls nach dieser beispielhaften Vorschrift hergestellt werden können, blutet im Extraktionsbetrieb so viel Heteropolysäure aus, bis das Verhältnis 3 : 1 erreicht ist. Bei der o. g. Methode nach Rais/Selucky entsteht immer das 3 : 1-Addukt.

2.    Das DB-21-C-7/HPMo-Addukt läßt sich auch durch eine Fällungsreaktion gewinnen: Man läßt eine Lösung von 0,5 g DB-21-C-7 in 20 cm³ Dioxan unter Rühren in eine Lösung von 1,3 g HPMo · 29 H₂O in 200 cm³ 0,5 mol/l HNO₃ fließen, wobei sich ein voluminöser Niederschlag absetzt. Dieser wird über einen Büchnertrichter abgetrennt, zunächst mit 0,5 mol/l HNO₃, schließlich mit H₂O gewaschen. Trocknen bei 50°C im Vakuum.

3.    Einer weiteren Vorschrift zufolge lassen sich erstmals auch die übrigen Beladungsformen der Heteropolysäureaddukte als mikrokristallilne Produkte auf direktem Wege isolieren. Gemäß der nachstehenden allgemeinen Arbeitsvorschrift, demonstriert am Beispiel der HPMo, können die $Na^+$-, $K^+$-, $NH_4^+$- und $Tl^+$-Formen hergestellt werden:

Man gießt eine Lösung von 1,0 g HPMo · 29 H₂O in 10 cm³ H₂O in eine Lösung von 0,5 g DB-21-C-7 in 20 ml Dioxan, wobei man nach kurzem Umrühren eine klare Lösung erhält. Unter Rühren läßt man 5 cm³ der entsprechenden kaltgesättigten M(I)-Nitrat-Lösung innerhalb von 1 min zufließen, wobei ein gelber, voluminöser Niederschlag ausfällt. Man läßt noch $^1/_2$ h weiterrühren und nutscht den Niederschlag anschließend über einen Büchner-Trichter ab, wäscht zunächst mit 50 cm³ der entsprechenden 0,5 mol/l M(I)- Nitratlösung, schließlich mit 20 cm³ H₂O. Die $K^+$-, $NH_4^+$- und $Tl^+$-Formen werden bei 110°C, die $Na^+$-Form bei 90°C getrocknet. Man erhält gelbe bis ockergelbe Pulver in quantitativer Ausbeute: ca. 1,3 g.

Gemäß den Vorschriften 1a u. b, 2 und 3 können alle übrigen DB-21-C-7/Heteropolysäure-Addukte sowie auch Addukte mit anderen Kronenethern hergestellt werden.

Die große Löslichkeit des HPMo- bzw. HPW-Adduktes in Nitrobenzol erlaubt eine hohe Beladung der organischen Phase mit dem Addukt, wobei Adduktkonzentrationen bis 0,016 mol/l (bezogen auf Phosphor) möglich sind. Eine solche Lösung liefert für die Extraktion von $Cs^+$ aus obigem MAW Extraktionskoeffizienten um 100. Extraktionskoeffizienten um 30 erhält man bereits mit einer 0,004-mol/l-Adduktlösung.

Ein weiterer beachtlicher, anwendungsbezogener Vorteil der Erfindung ist der, daß die beladenen Addukte auf einfache Weise durch kontinuierliche oder diskontinuierliche Rückextraktion der Cäsiumionen aus der organischen Phase mit Alkalimetall- oder Ammonium-Salzlösung regeneriert werden können und danach für eine weitere Charge wiederverwendbar sind. Die nach einer solchen Regenerierung erhaltene, das radioaktive Cäsium enthaltende Salzlösung kann eingedampft werden und das Konzentrat oder der sich bildende Salzkuchen in eine für die Endlagerung geeignete Verfestigungs-Matrix überführt werden. Das Konzentrat bzw. der Salzkuchen kann aber auch dem hochradioaktiven Abfall zugeschlagen werden.

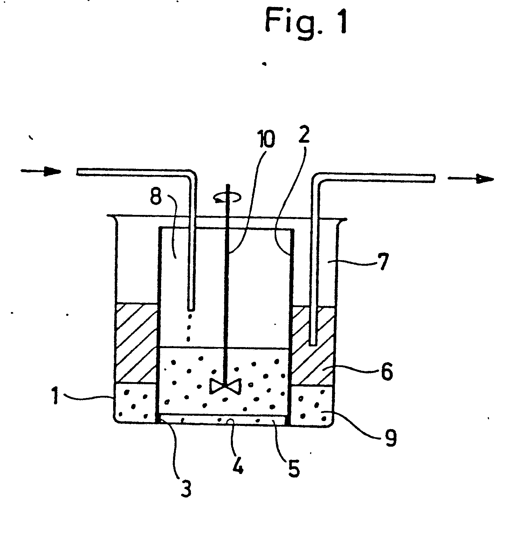

Im folgenden wird die Erfindung durch einige Beispiele sowie durch die Beschreibung der nachfolgenden Fig. 1 näher erläutert. Die Erfindung ist jedoch auf die Beispiele nicht beschränkt.

### Beispiel 1

### Verwendung einer 0,004 mol/l DB-21-C-7/HPMo-Lösung

Durch Auflösen von 0,94 g $H_3[PMo_{12}O_{40}]$ · 29 H₂O (Merck) und 0,485 g DB-21-C-7 (eigene Herstellung) in 100 cm³ Nitrobenzol wurde die Adduktlösung hergestellt. Sie enthielt 0,012 mol/l DB-21-C-7 und 0,004 mol/l HPMo (bezogen auf Phosphor). Nach guter Durchmischung von 20 cm³ Adduktlösung mit 20 cm³ einer MAW-Lösung, die eine Zusammensetzung aufwies, wie sie oben beschrieben wurde, konnte für das zu entfernende Cäsium ein Extraktionskoeffizient D zwischen 30 und 40 festgestellt werden (die Schwankungen sind darauf zurückzuführen, daß sich das komplizierte Gleichgewicht zwischen $H^+$, $Na^+$, $K^+$ und $Cs^+$ beim ersten Verteilungsschritt nicht vollständig eingestellt hatte).

Die organische Phase wurde durch die wäßrige Phase hindurch abpipettiert und wiederum mit dem gleichen Volumen MAW durchmischt. Nach drei weiteren diskontinuierlichen Verteilungsschritten hatte sich ein Gleichgewichtszustand mit dem MAW eingestellt. D lag danach bei 23. Die $Cs^+$-Kapazität dieser Adduktlösung wurde durch Extraktion einer neutralen 0,05 mol/l $CsNO_3$-Lösung zu 0,012 mol $Cs^+$/l festgestellt ( = theoret. Kapazität). Die bei diskontinuierlicher oder kontinuierlicher Arbeitsweise erreichte maximale Nutzkapazität liegt für den genannten MAW zwischen 40 und 50%. Sie wurde dadurch ermittelt, daß eine zu 100% $Cs^+$ beladene und mit $^{134}Cs$ markierte Adduktlösung wiederholt mit inaktivem MAW geschüttelt wurde, bis ein Gleichgewichtszustand erreicht war. Die praktisch nutzbare Kapazität eines Liters der 0,004 mol/l Adduktlösung entspricht also der $Cs^+$-Menge in 160 bis 200 l MAW.

Da Heteropolysäure-Addukte mit DB-21-C-7 nur minimal ausbluten im Gegensatz zur reinen Heteropolysäure, sind sie für einen kontinuierlichen Extraktionsbetrieb geeignet. Dies zeigte ein Laborversuch, bei dem in einer Mischer-Absetzer-Einheit (s. Fig. 1) insgesamt 1 dm³ MAW durch eine Vorlage von 40 cm³ 0,004 mol/l DB-21-C-7/HPMo-Adduktlösung durchgesetzt wurde. Bei diesem Versuch wurde weniger als 1% der HPMo aus der Nitrobenzolphase herausgewaschen. Im Vergleich dazu blutete beim gleichen Versuch eine reine 0,004 mol/l HPMo-Lösung zu mehr als 90% aus.

Jede Einheit der Extraktionsapparatur bestand aus einem 100-cm³-Becherglas 1, in dem konzentrisch ein Glaszylinder 2 auf kleinen Füßen 3 stand. So blieb dicht über dem Becherglasboden 4 ein Verbindungsspalt 5 offen, durch den die mobile MAW-Phase 6 in die Absetzer-Kammer 7 (Zwischenraum zwischen Zylinder und Becherglaswand) übertreten konnte. In der Mixer-Kammer 8 wurde die kontinuierlich eingeführte MAW-Lösung 6 mit der vorgelegten (oder ebenfalls kontinuierlich durchgesetzten) Addukt-Lösung 9 durch Rühren mit Hilfe eines Rührers 10 gemischt. Der kontinuierliche Durchsatz der Adduktlösung 9 wird in der Figur nicht gezeigt.

Die aus der Figur ersichtliche Mixer-Settler-Einheit ist nicht Teil der Erfindung, sondern wurde in Anlehnung an W. Fischer et al, Angew. Chem. 78 (1966) 19, erstellt. Für das erfindungsgemäße Verfahren können jedoch auch andere Vorrichtungen verwendet werden.

Als stationäre Phase wurden jeweils 20—40 cm³ der entsprechenden Adduktlösung 9 eingefüllt. Zum Weiterpumpen der mobilen Phase (MAW) 6 diente eine Vielfach-Schlauchpumpe (in der Figur nicht gezeigt), deren Pumpgeschwindigkeit 250 cm³/h betrug. Die Kontaktzeiten reichten somit zur Gleichgewichtseinstellung aus und die Phasentrennung war trotz der einfachen Apparatur sehr gut.

Man kann das Ausbluten des HPMo-Adduktes noch weiter verringern ( <0,5%), wenn man einen Überschuß an DB-21-C-7 verwendet, wobei $^1/_3$ der zur Bildung des 3 : 1-Adduktes notwendigen Kronenethermenge als Überschuß ausreicht. Der Überschuß hat jedoch keine Erhöhung des Extraktionskoeffizienten zur Folge, er dient lediglich zur Stabilisierung der Adduktlösung.

Wegen des geringen Ausblutens der Heteropolysäure-Addukte gestattet das erfindungsgemäße Verfahren auch Extraktionen von Lösungen größerer (und natürlich auch kleinerer) $Cs^+$-Gehalte, als dem im o. g. MAW (4 ppm) aufgeführten $Cs^+$-Gehalt, was mit reiner HPMo wegen Niederschlagsbildung nicht möglich ist. Die Addukte sind einsetzbar bis pH = 7 und bei Verwendung der $K^+$-Form auch darüber hinaus (vgl. Beispiel 3).

Die Regenerierung der Adduktlösung und damit die Reextraktion des $Cs^+$ erfolgte mit $KNO_3$- oder $NH_4NO_3$-Lösungen. Dabei hatte eine 2 mol/l $KNO_3$-Lösung den gleichen Reextraktionskoeffizienten $\bar{D}$ $\left( = \frac{c_{wäßr.}}{c_{org.}} \right)$ wie eine 5 mol/l $NH_4NO_3$-Lösung, nämlich 41, und eine 1 mol/l $KNO_3$-Lösung fast den gleichen wie eine 3 mol/l $NH_4NO_3$-Lösung, nämlich 20 (bzw. 23 für $NH_4NO_3$). $\bar{D}$ ist unabhängig davon, ob die Adduktlösung beispielsweise nur zu 0,1% oder aber zu 100% mit $Cs^+$ beladen ist. $\bar{D}$ ist jedoch abhängig von der gewählten Adduktkonzentration, und zwar ist $\bar{D}$ umso kleiner je größer die Adduktkonzentration ist. Da bei Adduktkonzentrationen $\geq$ 0,008 mol/l die Gefahr besteht, daß bei der Regenerierung mit $NH_4NO_3$ das Löslichkeitsprodukt der dabei entstehenden $NH_4^+$-Beladungsform in der organischen Phase überschritten wird, empfiehlt es sich, im erfindungsgemäßen Verfahren mit Konzentrationen zwischen 0,004 und 0,006 mol/l zu arbeiten.

Bei Verwendung von $KNO_3$ konnte dagegen mit Adduktkonzentrationen bis 0,012 mol/l gearbeitet werden, ohne daß eine Niederschlagsbildung zu beobachten war. Die Regenerierung einer solchen Lösung mit einer gesättigten $KNO_3$-Lösung (ca. 2,8 mol/l) lieferte einen $\bar{D}$-Wert von 13.

Nach der Regenerierung mit $NH_4NO_3$ kann das radioaktive Cs in einem eigens für die Cs-Gewinnung aus $NH_4NO_3$-Lösungen konstruierten Reaktor (J. C. Mora, Energ. Nucl. 14 (1972) 38) durch thermische Zersetzung des $NH_4NO_3$ isoliert werden.

Wesentlich weniger aufwendig und auch gefahrloser ($NH_4NO_3$ neigt zum Verpuffen) ist die Weiterbehandlung einer Cs-haltigen $KNO_3$-Lösung. Diese ließ sich leicht und gefahrlos mit einer IR-Lampe zu einem Salzkuchen eindampfen.

Der $KNO_3$-Salzkuchen oder der Rückstand aus der $NH_4NO_3$-Zersetzung kann anschließend in den hochradioaktiven Abfall (HAW) oder in eine geeignete Verfestigungs-Matrix überführt werden.

Da mit 1 mol/l $KNO_3$ schon so große $\bar{D}$-Werte erreicht werden, wirken sich natürlich größere $K^+$-Mengen in einem MAW störend auf die $Cs^+$-Extraktion aus. Diese Störung setzt aber merklich erst bei $K^+$-Mengen >500 ppm ein, dann sinkt der Extraktionskoeffizient auf Werte <10. Der als Beispiel aufgeführte MAW enthält nur 50 ppm $K^+$.

Bei der Regenerierung entstand aus der ursprünglichen $H^+$-Form des Adduktes die $NH_4^+$- bzw. $K^+$-Form (DB-21-C-7/$NH_4$PMo bzw. DB-21-C-7/KPMo), welche zu Beginn eines neuen diskontinuierlichen Extraktionszyklus zunächst zwar nur D-Werte von 12 bzw. 7 lieferten, jedoch allmählich einem Gleichgewichtswert zwischen 15 und 20 zustrebten.

### Beispiel 2

#### Verwendung einer 0,004 mol/l DB-21-C-7/HPW-Lösung

Statt der HPMo-Addukte können ebenso gut auch Addukte mit HPW bei der kontinuierlichen und diskontinuierlichen $Cs^+$-Extraktion aus o. g. MAW eingesetzt werden. Durch Auflösen von 1,33 g $H_3[PW_{12}O_{40}] \cdot 24\,H_2O$ (Merck) und 0,485 g DB-21-C-7 (eigene Herstellung) in 100 $cm^3$ Nitrobenzol wurde die Adduktlösung hergestellt. Sie enthielt 0,012 mol/l DB-21-C-7 und 0,004 mol/l HPW (bezogen auf P). Nach guter Durchmischung von 20 $cm^3$ Adduktlösung mit 20 $cm^3$ der gleichen MAW-Lösung wie in Beispiel 1 wurden im ersten Verteilungsschritt ebenfalls Extraktionskoeffizienten zwischen 30 und 40 erreicht. Nach weiteren drei bis vier diskontinuierlichen Verteilungsschritten lag D bei 22. Die $Cs^+$-Kapazität der Adduktlösung, bezogen auf 1 g festes Addukt, war jedoch wegen der höheren Molmasse von HPW etwas geringer.

Auch eine Grünfärbung, wie sie gelegentlich bei PMo-Addukten (besonders bei der $H^+$-Form) beobachtet wird, trat bei PW-Addukten nicht in Erscheindung, da HPW schwerer reduzierbar und im Gegensatz zu HPMo nicht lichtempfindlich ist. Die Verfärbung der PMo-Addukte hat aber keinen negativen Einfluß auf den Extraktionskoeffizienten, da eventuell reduziertes Mo bei Kontakt mit MAW durch die $HNO_3$ wieder oxidiert wird. Auch die nach Bestrahlung mit einer $\gamma$-Dosis von $10^8$ rad zu beobachtende Grünfärbung des festen DB-21-C-7/HPMo-Adduktes verschwand bei Kontakt mit MAW wieder, wobei keine Abnahme des Extraktionskoeffizienten festgestellt wurde.

### Beispiel 3

#### Verwendung einer 0,004 mol/l DB-21-C-7/KPW-Lösung

40 $cm^3$ einer 4 : 1-Adduktlösung, hergestellt durch Auflösen von 1,33 g HPW $\cdot$ 24 $H_2O$ und 0,65 g DB-21-C-7 in 100 $cm^3$ Nitrobenzol wurden in einer Mischer-Absetzer-Einheit (siehe Fig. 1) $^1/_2$ h mit 20 $cm^3$ 2 mol/l $KNO_3$-Lösung gerührt, wobei Überführung in die $K^+$-Form erfolgte. Nach dem Entmischen wurde der größte Teil der $KNO_3$-Lösung abgepumpt und anschließend innerhalb von 2—3 Stunden 1 Liter eines $Cs^+$-freien MAW von pH=13 kontinuierlich durchgesetzt. Dieser alkalische MAW wird im folgenden mit »MAW pH 13« bezeichnet. Er ist stark vereinfacht, besitzt die gleiche Ionenstärke wie der o. g. simulierte stark saure MAW und hat folgende Zusammensetzung:

1,5 mol/l $NaNO_3$, 0,1 mol/l NaOH, 50 ppm $K^+$.

Auch der o. g. stark saure MAW kann vereinfacht werden. Dieser vereinfachte MAW wird in den folgenden Beispielen mit »MAW pH 0« bezeichnet und hat die Zusammensetzung:

1 mol/l $HNO_3$, 0,5 mol/l $NaNO_3$, 50 ppm $K^+$.

In einem entsprechenden Versuch konnte gezeigt werden, daß von den Bestandteilen des o. g. MAW nur $H^+$, $Na^+$ und $K^+$ einen Einfluß auf die $Cs^+$-Extraktion haben, so daß diese Vereinfachung zulässig ist.

Nach dem Durchsatz des alkalischen MAW wurde durch Extraktion einer neutralen 0,1 mol/l $CsNO_3$-Lösung die $Cs^+$-Kapazität der Adduktphase bestimmt. Sie entsprach der theoretischen (0,012 mol $Cs^+$/l-Adduktlösung). Erst der weitere Kontakt der Adduktlösung mit »MAW pH 13« über 4 Tage hinweg führte zu einer Kapazitätsabnahme von 7%. Dies entspricht einem Verlust von 0,9 g HPW pro Liter Adduktlösung. Der Extraktionskoeffizient für den genannten »MAW pH 13« liegt nach Gleichgewichtseinstellung zwischen 10 und 15.

DB-21-C-7 ist demnach in der Lage, 12-Wolframatophosphorsäure über ihren normalen Beständigkeitsbereich hinaus zu stabilisieren. Ihr Abbau beginnt laut Literatur im Normalfall zwischen pH=2 und pH=3 und ist abgeschlossen zwischen pH=7 und pH=8 (Zerfall in Hydrogenphosphat und Wolframat). Dies wurde in einem entsprechenden Versuch mit kronenetherfreier HPW-Nitrobenzollösung bestätigt.

8

## Beispiel 4

### Verwendung einer 0,004 mol/l DB-21-C-7/KPW-Lösung

20 cm$^3$ einer 0,004 mol/l DB-21-C-7/KPW-Lösung (Molverhältnis 4 : 1), deren Herstellung gemäß Beispiel 3 erfolgte, wurden in einer diskontinuierlichen Extraktion bei stationärer organischer Phase (vergleiche Beispiel 1) abwechselnd mit dem als Beispiel beschriebenen (vollständigen) stark sauren MAW und »MAW pH 13« (incl. 4 ppm Cs) in Kontakt gebracht. Nach insgesamt 6 Verteilungen betrug der D-Wert für den stark sauren MAW 14 und für den stark alkalischen MAW 11.

## Beispiel 5

### Verwendung einer DB-21-C-7/HSiW-Lösung

Durch Auflösen von 19,0 g H$_4$[Si(W$_3$O$_{10}$)$_4$] · x H$_2$O (Merck) und 9,7 g DB-21-C-7 in 1 dm$^3$ Nitrobenzol wurde die Adduktlösung hergestellt. Sie enthielt 0,003 mol/l HSiW (bez. auf Si) und 0,012 mol/l DB-21-C-7 ( ≙ 4 : 1-Addukt).

20 ml der so hergestellten Adduktlösung wurden 1 h mit 20 ml des als Beispiel genannten MAW geschüttelt. Dabei wurde für Cs$^+$ ein Extraktionskoeffizient von 24,8 erreicht. Vergleiche dazu die Extraktion mit einer reinen HSiW-Lösung: D = 0,02. (Die HSiW mußte zudem wegen ihrer geringen Löslichkeit in Nitrobenzol der wäßrigen Phase zugesetzt werden, ebenfalls 0,003 mol/l.)

## Beispiel 6

### Verwendung einer DB-24-C-8/HPMo-Adduktlösung

Durch Auflösen von 5,4 g DB-24-C-8 und 9,4 g HPMo · 29 H$_2$O in Nitrobenzol wurde die Adduktlösung hergestellt. Sie enthielt 0,004 mol/l HPMo (bez. auf P) und 0,012 mol/l DB-24-C-8 ( ≙ 3 : 1-Addukt).

20 ml der so hergestellten Adduktlösung wurden 1 h mit 20 ml einer Lösung von 4 ppm Cs in 1 mol/l HNO$_3$ geschüttelt. Dabei wurde für Cs$^+$ ein Extraktionskoeffizient von 5,5 erreicht.

## Beispiel 7

### Verwendung einer B-15-C-5/HPMo-Adduktlösung

Durch Auflösen von 3,2 g B-15-C-5 und 9,4 g HPMo · 29 H$_2$O in 1 dm$^3$ Nitrobenzol wurde die Adduktlösung hergestellt. Sie enthielt 0,004 mol/l HPMo und 0,012 mol/l B-15-C-5 ( ≙ 3 : 1-Addukt).

20 ml der so hergestellten Adduktlösung wurden 1 h mit 20 ml einer Lösung von 4 ppm Cs in 1 mol/l HNO$_3$ geschüttelt. Dabei wurde für Cs$^+$ ein Extraktionskoeffizient von 8,2 erreicht.

## Beispiel 8

### Verwendung einer B-15-C-5/HPMo-Adduktlösung

Die Adduktlösung wurde analog Beispiel 10 hergestellt. 20 ml dieser Lösung wurden 1 h mit 20 ml einer 4 ppm Cs-Lösung in H$_2$O (neutral) geschüttelt. Dabei wurde für Cs$^+$ ein Extraktionskoeffizient von 486, entsprechend einer %-Extraktion von 99,79%, erreicht. Der D-Wert blieb auch nach dem 2. Verteilungsschritt praktisch unverändert (466 ≙ 99,79%). Vergleiche dazu die Extraktion mit einer reinen 0,004 mol/l HPMo-Lösung:

%-Extraktion = 85,4%. 10,5% des Cs$^+$ wurden als nicht extrahierbarer schwerlöslicher CsPMo-Niederschlag gefällt. Gleichzeitig wurde ein starkes Ausbluten der organischen Phase beobachtet. Nach dem 2. Verteilungsschritt lag D bei 5,4.

## Beispiel 9

### Verwendung einer DB-21-C-7/HPMo-Lösung

Durch Auflösen von 12,4 g festem DB-21-C-7/HPMo 3 : 1-Addukt in 1 dm$^3$ einer 1 : 1-Mischung (v/v) aus Nitrobenzol und Chloroform wurde die Adduktlösung hergestellt. Sie enthielt 0,004 mol/l HPMo und 0,012 mol/l DB-21-C-7.

20 ml der so hergestellten Adduktlösung wurden mit 20 ml MAW 1 h geschüttelt. Dabei wurde für Cs+ ein Extraktionskoeffizient von 16,8 erreicht.

## Beispiel 10

### Verwendung einer DB-18-C-6/HPMo-Lösung

Durch Wiederauflösen von 1 g eines durch Fällung aus homogener Lösung gewonnenen DB-18-C-6/HPMo [3 : 1]-Adduktes in 1 dm³ Nitrobenzol wurde die Adduktlösung hergestellt. Sie enthielt $3,4 \cdot 10^{-4}$ mol/l HPMo und $1 \cdot 10^{-3}$ mol/l DB-18-C-6.

20 ml der so hergestellten Adduktlösung wurden 1 h mit 20 ml einer Lösung von $^{137}$Cs-Tracermengen in $H_2O$ geschüttelt. Dabei wurde für Cs+ ein Extraktionskoeffizient von 100,6 erreicht.

## Beispiel 11

### Verwendung einer 0,012 mol/l DB-21-C-7/HPW-Lösung

Durch Auflösen von 4,0 g $H_3[P(W_3O_{10})_4] \cdot 24\,H_2O$ (Merck) und 1,45 g DB-21-C-7 in 100 ml einer 3 : 1-Mischung (v/v) aus Nitrobenzol und Tetrachlorethan wurde die Adduktlösung hergestellt (Dichte ≅ 1,3 g/cm³). Sie enthielt 0,012 mol/l HPW (bez. auf P) und 0,036 mol/l DB-21-C-7 (≙ 3 : 1-Addukt). 20 ml der so hergestellten Adduktlösung wurden 1 h mit 20 ml eines stark sauren MAW, dessen Zusammensetzung unten stehende Tabelle wieder gibt, geschüttelt. Der dabei für Cs+ erreichte Extraktionskoeffizient lag bei 6,1.

(Reextraktion mit gesättigter $KNO_3$-Lösung: $\bar{D} = 13$).

Vergleiche dazu die Extraktion mit einer reinen 0,012 mol/l HPW- oder HPMo-Lösung:

Cs+ wird fast quantitativ als nicht extrahierbarer CsPW- bzw. CsPMo-Niederschlag gefällt, wobei die Fällung durch die hohe Na+-Konzentration noch begünstigt wird.

Statt des hier verwendeten 1,1,2,2-Tetrachlorethan kann auch Chloroform als Lösungsmittelkomponente verwendet werden (ebenfalls 3 : 1-Mischung).

| Inhaltsstoff | Konzentration g/dm³ |
|---|---|
| HNO₃ | 50,4 (0,8 mol/l) |
| NaNO₃ | 289 (3,4 mol/l) |
| Uran | 1,9 |
| Calcium | 1,6 |
| Magnesium | 0,8 |
| Eisen | 0,4 |
| Molybdän | 0,4 |
| Aluminium | 0,24 |
| Kupfer | 0,16 |
| Zink | 0,16 |
| Chrom | 0,08 |
| Kalium | 0,08 |
| Mangan | 0,08 |

**0 073 262**

(Fortsetzung)

| Inhaltsstoff | Konzentration g/dm³ |
|---|---|
| Nickel | 0,08 |
| Zirkonium | 0,08 |
| Ruthenium | 0,006 |
| Cäsium | 0,004 |
| Strontium | 0,001 |

Es handelt sich hierbei um einen simulierten MAW jüngeren Datums (1980) aus dem KfK. Seine Dichte beträgt ca. 1,2 g/cm³. Bemerkenswert ist der hohe $Na^+$-Gehalt.

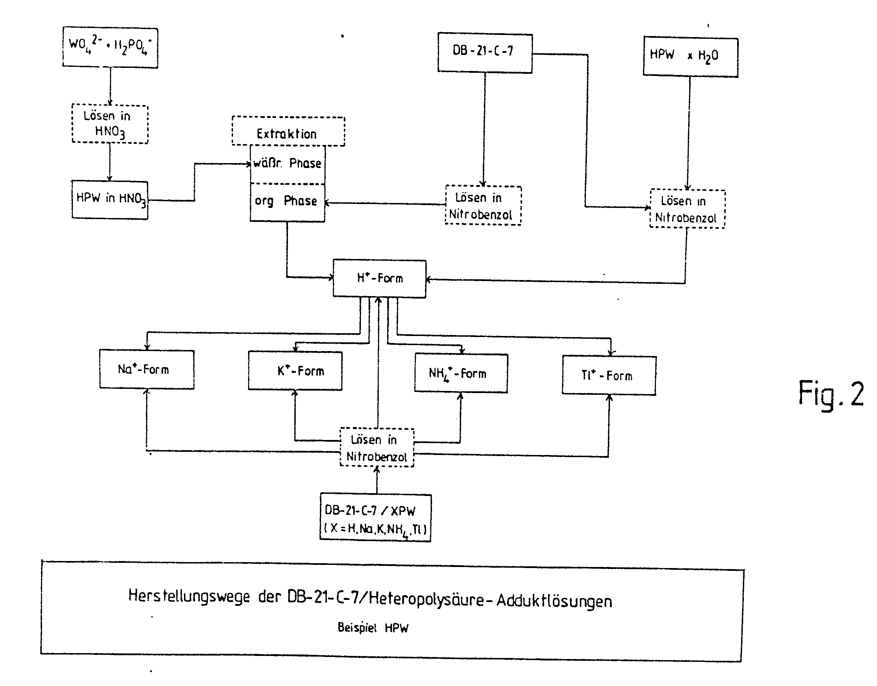

Fig. 2 zeigt schematisch die verschiedenen Möglichkeiten zur Herstellung von Kronenether/Heteropoly-säure/salz-Adduktlösungen anhand des Beispiels einer DB-21-C-7/XPW-Adduktlösung.

**Patentansprüche**

1. Verfahren zum Abtrennen von Cäsiumionen aus wäßrigen Lösungen unter Verwendung einer Adduktverbindung, bestehend aus einem Kronenether und einer anorganischen, in stark saurem und oxidierendem Medium beständigen Heteropolysäure, gekennzeichnet durch die Verfahrensschritte

a) Herstellung einer Lösung der Adduktverbindung, die aus einem Kronenether aus der Gruppe 2,3,11,12-Dibenzo-1,4,7,10,13,16-hexa-oxa-cyclo-octadeca,2,11-dien (Dibenzo-18-krone-6, abgekürzt DB-18-C-6) oder 2,5,8,15,18,21-hexa-oxa-tricyclo[20.4.0.0$^{9,14}$]-hexacosan (Dicyclohexyl-18-krone-6, abgekürzt DC-18-C-6) oder höheren Homologen hiervon mit bis zu 30 Ringatomen, davon 10 O-Atomen oder Benzo-15-krone-5 (B-15-C-5) und aus einer Heteropolysäure aus der Gruppe
12-Molybdatophosphorsäure (HPMo),
12-Wolframatophosphorsäure (HPW),
12-Molybdatokieselsäure (HSiMo) oder
12-Wolframatokieselsäure (HSiW)
bzw. deren Salzen besteht, in einem polaren organischen Lösungsmittel,
b) Inkontaktbringen der Cäsiumionen enthaltenden wäßrigen Lösung mit der Lösung der Adduktverbindung aus a) zur Extraktion des Cäsiums aus der wäßrigen in die organische Phase und
c) Abtrennen der mit Cäsiumionen beladenen, organischen Phase von der Cäsiumfreien oder nur noch geringe Mengen Cäsium enthaltenden wäßrigen Lösung.

2. Verfahren nach Anspruch 1, dadurch gekennzeichnet, daß die Lösung der Adduktverbindung als organisches Lösungsmittel Nitrobenzol, oder ein Gemisch aus Nitrobenzol und mindestens einer Species aus der Gruppe 1,1,2,2-Tetrachlorethan, Chloroform, 1,2-Dichlorethan oder 1,2-Dichlorbenzol enthält.

3. Verfahren nach Anspruch 1, dadurch gekennzeichnet, daß die Lösung der Adduktverbindung vor deren Kontakt mit der Cäsiumionen enthaltenden wäßrigen Lösung als flüssige Ionenaustauscher-Phase auf Kieselgel als Trägermaterial aufgebracht wird.

4. Verfahren nach Anspruch 1, dadurch gekennzeichnet, daß die Herstellung der Adduktlösungen durch Auflösen der Einzelkomponenten in Nitrobenzol im Molverhältnis

| | |
|---|---|
| Kronenether zu HPMo | wie ≧ 3 : 1 |
| Kronenether zu HPW | wie ≧ 3 : 1 |
| Kronenether zu HSiMo | wie ≧ 4 : 1 |
| Kronenether zu HSiW | wie ≧ 4 : 1 |

erfolgt.

5. Verfahren nach Anspruch 1, dadurch gekennzeichnet, daß die Herstellung der Addukt-Lösung durch Wiederauflösen einer durch

a) Mischen einer Dibenzo-Kronenether-Lösung mit einer Heteropolysäure-Lösung und Abtrennen

**0 073 262**

der jeweiligen Lösungsmittel in amorphem oder kristallinem Lösungsmittel in amorphem oder kristallinem Zustand erhaltenen Adduktverbindung in der H⁺-Form oder

b) Fällung mit Hilfe einer M(I)-Nitrat-Lösung, wobei M(I) = Na, K, Tl oder NH₄ bedeutet, aus einer klaren Lösungs-Mischung eines Dibenzo-Kronenethers mit einer Heteropolysäure in amorphem oder kristallinem Zustand erhaltenen, von den Lösungsmitteln abgetrennten Adduktverbindung in der entsprechend vorliegenden M(I)-Beladungsform erfolgt.

**Claims**

1. Process for the extraction of cesium ions from aqueous solutions with an adduct compound containing a crown ether and an inorganic heteropoly acid component stable in highly acid and oxidizing medium, comprising the following process steps:

(a) producing a solution of the adduct compound consisting of a crown ether of the group 2,3,11,12-dibenzo-1,4,7,10,13,16-hexa-oxa-cyclo-octadeca, 2,11-dien-(dibenzo-18-crown-6, abbreviated DB-18-C-6) or 2,5,8,15,18,21-hexa-oxa-tricyclo[20.4.0.0⁹·¹⁴] hexacosane (dicyclohexyl-18-crown-6, abbreviated DC-18-C-6) or higher homologues of them with up to 30 ring atoms, among them 10 O-atoms or benzo-15-crown-5 (B-15-C-5) and a heteropoly acid of the group 12-molybdophosphoric acid (HPMo), 12-tungstophosphoric acid (HPW), 12-molybdosilicic acid (HSiMo), or 12-tungstosilicic acid (HSiW), and their salts, respectively, in a polar organic solvent;

(b) bringing the aqueous solution containing the cesium ions into contact with the adduct compound from (a) to extract the cesium from the aqueous solution into the organic phase; and

(c) separating the organic phase charged with cesium ions from the aqueous solution free of cesium or containing but little amounts of cesium.

2. Process as defined in claim 1, wherein the solution of the adduct compound contains as organic solvent nitrobenzene or a mixture of nitrobenzene and at least one species of the group 1,1,2,2-tetrachlorethane, chloroform, 1,2-dichlorethane or 1,2-dichlorobenzene.

3. Process as defined in claim 1, wherein the solution of the adduct compound, before its contact with the aqueous, cesium ions containing solution, is applied as a liquid ion exchanger phase on silica gel as carrier material.

4. Process as defined in claim 1, wherein the adduct solution is produced by dissolving the individual components in nitrobenzene at the molar ratio

| | |
|---|---|
| crown ether to HPMo | equivalent to $\geq$ 3 : 1, |
| crown ether to HPW | equivalent to $\geq$ 3 : 1, |
| crown ether to HSiMo | equivalent to $\geq$ 4 : 1, |
| crown ether to HSiW | equivalent to $\geq$ 4 : 1. |

5. Process as defined in claim 1, wherein the adduct solution is produced by redissolution of

(a) an adduct compound in the H⁺-form obtained by mixing a dibenzo crown ether solution with a heteropoly acid solution and separation of the respective solvent in the amorphous or crystalline state; or

(b) precipitation using an M(I) nitrate solution, wherein M(I) = Na, K, Tl or NH₄, of an adduct compound in the existing M(I) charged form separated from the solvents and obtained in the amorphous or crystalline state by means of a heteropoly acid from a clear solvent mixture of a dibenzo crown ether.

**Revendications**

1. Procédé pour séparer les ions césium à partir de solutions aqueuses, par utilisation d'un composé d'addition constitué d'un éther couronne et d'un hétéropolyacide minéral stable en milieu fortement acide et oxydant, procédé caractérisé par les étapes de

a) préparation d'une solution de composé d'addition qui est constitué par un éther couronne du groupe 2,3,11,12-dibenzo-1,4,7,10,13,16-hexa-oxa-cyclo-octadéca,2,11-diène (dibenzo-18-couronne-6, en abrégé DB-18-C-6) ou bien 2,5,8,15,18,21-hexa-oxa-tricyclo[20.4.0.0⁹·¹⁴]-hexacosane (dicyclohexyl-18-couronne-6, en abrégé DC-18-C-6) ou leurs homologues supérieurs avec jusqu'à 30 atomes dans le cycle, dont 10 atomes de O, ou le benzo-15-couronne-5 (B-15-C-5), et par un

hétéropolyacide du groupe:
acide 12-molybdatophosphorique (HPMo),
acide 12-tungstatophosphorique (HPW),
acide 12-molybdatosilicique (HSiMo) ou
acide 12-tungstatosilicique (HSiW)
ou par leurs sels, dans un solvant organique polaire,

b)  mise en contact de la solution aqueuse contenant les ions césium avec la solution du composé d'addition de l'étape a) pour l'extraction du césium à partir de la phase aqueuse, dans la phase organique et

c)  séparation de la phase organique chargée des ions césium, de la solution aqueuse exempte de césium ou ne contenant plus que de faibles quantités de césium.

2. Procédé selon la revendication 1, caractérisé en ce que la solution du composé d'addition contient, comme solvant organique,. du nitrobenzène ou un mélange de nitrobenzène et d'au moins un membre du groupe 1,1,2,2-tétrachloréthane, chloroforme, 1,2-dichloréthane ou 1,2-dichlorobenzène.

3. Procédé selon la revendication 1, caractérisé en ce que la solution du composé d'addition est adsorbée sur du gel de silice comme matériau de support, avant d'être mise en contact avec la solution aqueuse contenant les ions césium, comme phase échangeuse d'ions liquide.

4. Procédé selon la revendication 1, caractérisé en ce que la préparation de la solution de composé d'addition s'effectue par dissolution des composants individuels dans le nitrobenzène, dans un rapport molaire:

| | |
|---|---|
| éther couronne : HPMo | $\geq 3 : 1$ |
| éther couronne : HPW | $\geq 3 : 1$ |
| éther couronne : HSiMo | $\geq 4 : 1$ |
| éther couronne : HSiW | $\geq 4 : 1.$ |

5. Procédé selon la revendication 1, caractérisé en ce que la préparation de la solution de composé d'addition s'effectue par redissolution de:

a)  un composé d'addition, obtenu par mélange d'une solution dibenzo-éther couronne et élimination du solvant, à l'état amorphe ou cristallisé, sous la forme H$^+$, ou

b)  un composé d'addition obtenu par précipitation à l'aide d'une solution de nitrate de M (I), où M (I) signifie Na, K, Tl ou NH$_4$, à partir d'un mélange en solution claire d'un dibenzo-éther-couronne avec un hétéropolyacide, à l'état amorphe ou cristallisé après élimination des solvants, sous la forme de charge M (I) correspondante.

13

# Fig. 1

0 073 262

```
[ WO₄²⁻ + H₂PO₄⁻ ]                    [ DB-21-C-7 ]          [ HPW  x H₂O ]
        │                                    │                      │
        ▼                                    │                      │
   ┌ Lösen in ┐                              │                      │
   └  HNO₃   ┘         ┌ Extraktion ┐        │                      │
        │              │ wäßr. Phase │◄──┐   │                      │
        ▼              │─────────────│   │   ▼                      ▼
 [ HPW in HNO₃ ]───────┤ org. Phase  │◄──── ┌ Lösen in ┐     ┌ Lösen in ┐
                       └─────────────┘      └Nitrobenzol┘     └Nitrobenzol┘
                              │                                     │
                              ▼                                     │
                          [ H⁺-Form ]◄─────────────────────────────┘
                              │
        ┌──────────┬──────────┼──────────┬──────────┐
        ▼          ▼          │          ▼          ▼
  [ Na⁺-Form ] [ K⁺-Form ] [ NH₄⁺-Form ] [ Tl⁺-Form ]
        ▲          ▲          ▲          ▲
        └──────────┴─ ┌ Lösen in ┐ ─┴──────────┘
                      └Nitrobenzol┘
                           ▲
                  [ DB-21-C-7 / XPW ]
                  ( X = H,Na,K,NH₄,Tl )
```

$WO_4^{2-} + H_2PO_4^-$

DB-21-C-7

HPW x $H_2O$

Lösen in $HNO_3$

Extraktion

wäßr. Phase

org. Phase

HPW in $HNO_3$

Lösen in Nitrobenzol

Lösen in Nitrobenzol

$H^+$-Form

$Na^+$-Form

$K^+$-Form

$NH_4^+$-Form

$Tl^+$-Form

Lösen in Nitrobenzol

DB-21-C-7 / XPW
( X = H,Na,K,$NH_4$,Tl )

Herstellungswege der DB-21-C-7/Heteropolysäure-Adduktlösungen

Beispiel HPW

Fig. 2